# DEMANDE DE BREVET EUROPEEN

(11) **EP 1 063 841 A1**
(43) Date de publication de la demande: **27.12.2000**
(21) Numéro de dépôt: 00401610.1
(22) Date de dépôt: 08.06.2000
(51) Int. Cl.: H04N 3/15

(54) **Détecteur du type à pixels actifs**

(30) Priorité: 23.06.1999 FR 9908007
(71) Demandeur: AGENCE SPATIALE EUROPEENNE, F-75738 Paris Cedex 15 (FR)
(72) Inventeur: Martin, Didier Dieudonné Elisabeth, 2343 KV Oegstgeest (NL)
(74) Mandataire: Jacquard, Philippe Jean-Luc

(57) **Abrégé**

L'Invention est relative à un détecteur du type à pixels actifs comprenant M lignes et N colonnes, chaque pixel comprenant une électrode supérieure de détection et une électrode inférieure de détection, caractérisé en ce que les électrodes supérieures de détection sont interconnectées suivant les lignes (ou les colonnes), en ce que les électrodes inférieures sont interconnectées suivant les colonnes (ou les lignes), pour former pour chaque ligne, une sortie d'interconnexion de ligne (IL₁, IL₂, IL₃) et pour chaque colonne, une sortie d'interconnexion de colonne (IC₁, IC₂, IC₃), chaque ligne étant portée à un premier potentiel et couplée à un amplificateur de ligne (AL₁, AL₂, AL₃), et chaque colonne étant portée à un deuxième potentiel et couplée à un amplificateur de colonne (AC₁, AC₂, AC₃)

## Description

La présente invention a pour objet un détecteur du type à pixels actifs (ou « APD »).

Il existe deux types principaux de détecteurs intégrés, à savoir les dispositifs à couplage de charges (ou « CCD ») dans lesquels l'image est stockée puis transférée pixel par pixel vers une chaîne d'acquisition, et les détecteurs à pixels actifs (ou « APD ») dans lesquels chaque pixel est polarisé et pré-amplifié de manière séparée.

Certains détecteurs, notamment ceux mettant en oeuvre des jonctions supraconductives à effet tunnel (ou « STJ »), ne peuvent être utilisés que dans le mode « APD ». Une particule ou un photon absorbé génère un signal représentant un excédent de charge ou un courant qui doit être lu instantanément, en ce sens qu'il ne peut être stocké en vue d'un multiplexage comme dans le cas des capteurs de type « CCD ». Ceci nécessite donc une chaîne d'acquisition individuelle pour chaque pixel. Ceci implique la mise en oeuvre de nombreux circuits, mais surtout, il peut devenir difficile, voire impossible de réaliser les connexions nécessaires lorsque le nombre de pixels est élevé. Le problème devient encore plus critique dans le cas de détecteurs cryogéniques (par exemple les détecteurs de type « STJ ») pour lesquels chaque fil de connexion additionnel augmente les pertes thermiques de la partie cryogéniques.

La demande de Brevet Européen EP 0 809 394 (KODAK INDUSTRIE) propose une architecture qui permet de simplifier les chaînes de lecture, mais sans toutefois remettre en cause la nécessité d'associer une telle chaîne à chaque pixel.

L'invention a pour objet un détecteur qui permette de diminuer le nombre de chaînes de lecture ainsi que le nombre de connexions.

L'invention concerne ainsi un détecteur du type à pixels actifs comprenant M lignes et N colonnes, chaque pixel comprenant une électrode supérieure de détection et une électrode inférieure de détection, caractérisé en ce que les électrodes supérieures de détection sont interconnectées suivant les lignes (ou les colonnes), en ce que les électrodes inférieures sont interconnectées suivant les colonnes (ou les lignes), pour former pour chaque ligne une sortie d'interconnexion de ligne et pour chaque colonne une sortie d'interconnexion de colonne, chaque ligne étant portée à un premier potentiel et couplée à un amplificateur de ligne, et chaque colonne étant portée à un deuxième potentiel et couplée à un amplificateur de colonne.

Alors que les détecteurs connus nécessitent de mettre en oeuvre M.N + 1 connexions et M.N chaînes de lecture, le dispositif selon l'invention ne nécessite que M+N connexions et (M+N) chaînes de lecture. En particulier, pour une matrice carrée (M = N), ayant N² pixels, le dispositif selon l'invention ne nécessite que 2N connexions, et 2 N chaînes de lecture, au lieu de N² + 1 connexions et N² chaînes de lecture, selon l'art antérieur.

Les amplificateurs de ligne peuvent être des amplificateurs à gain élevé dont une première entrée est portée au premier potentiel et dont une deuxième entrée est connectée à une dite interconnexion de ligne.

Les amplificateurs de colonne peuvent être des amplificateurs à gain élevé dont une première entrée est portée au deuxième potentiel et dont une deuxième entrée est connectée à une dite interconnexion de colonne.

L'invention s'applique en particulier aux détecteurs supraconducteurs à effet tunnel (« STJ »).

L'invention sera mieux comprise avec la description qui va suivre donnée à titre d'exemple non limitatif, en liaison avec les dessins, dans lesquels :

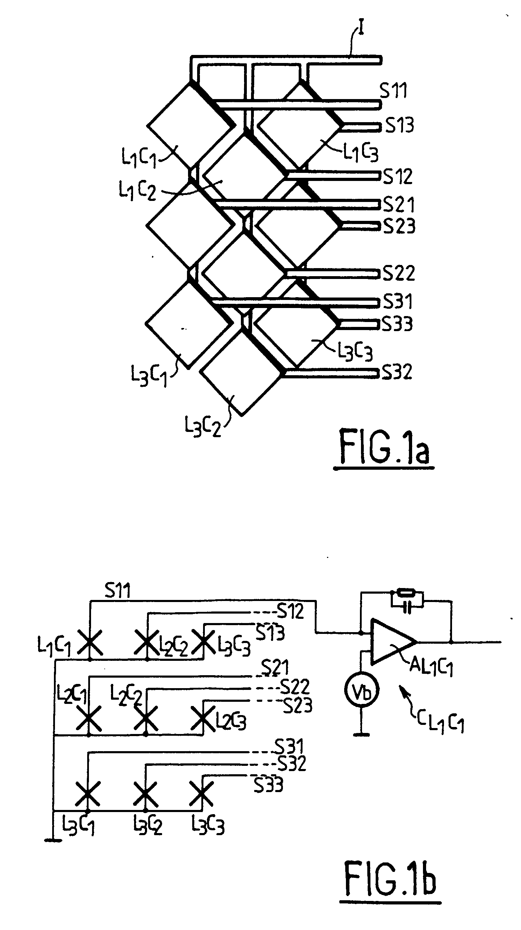

- les figures 1a et 1b illustrent la connexion des pixels et des chaînes de lecture, selon l'art antérieur.
- Les figures 2a et 2b illustrent la connexion des pixels et des chaînes de lecture, selon l'invention.

La figure la montre à titre d'exemple une matrice de détection à 3 x 3 pixels L₁C₁, L₁C₂, L₁C₃, L₂C₁, L₂C₂, L₂C₃, L₃C₁, L₃C₂ et L₃C₃ organisés suivant des lignes Ll à L3 et des colonne C₁ à C₃. Chaque point de détection ou pixel présente une électrode supérieure et une électrode inférieure. Les électrodes inférieures sont interconnectées dans la matrice et sont polarisées grâce à une ligne de sortie I commune à tous les pixels.

Une ligne de métallisation de sortie S₁₁, S₁₂, S₁₃, S₂₁, S₂₂, S₂₃, S₃₁, S₃₂, S₃₃ est affectée à la connexion de l'électrode supérieure de chaque pixel, pour être connectée à un étage de sortie C_{L1C1} ......... C_{L3C3}, à raison d'un étage pour chaque pixel.

L'interconnexion de tous ces fils de sortie devient de plus en plus difficile au fur et à mesure que le nombre de pixels augmente, ce qui conduit à de faibles largeurs pour les métallisations et éventuellement à des métallisations multi-couches qui compliquent le procédé de fabrication. En outre, les pistes métalliques affectées aux électrodes supérieures recouvrent en partie celles-ci et créent des zones aveugles masquant le détecteur, et dans lesquelles les photons incidents ne sont pas détectés.

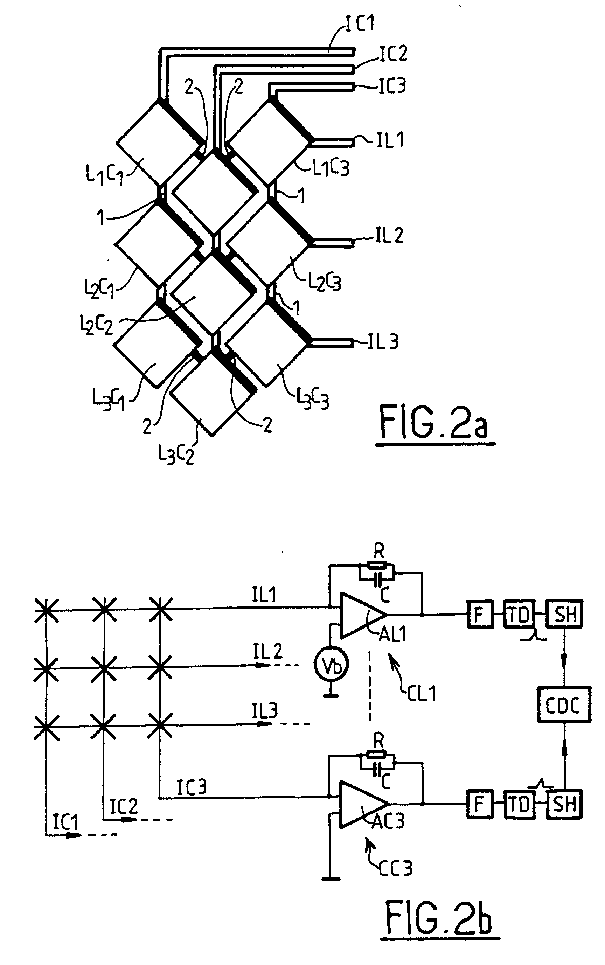

Selon l'invention et comme représenté à la figure 2a, les électrodes inférieures sont interconnectées, selon les colonnes, par des liaisons conductrices 1, chaque colonne présentant une sortie d'interconnexion IC₁, IC₂ et IC₃, et les électrodes supérieures sont interconnectées selon les lignes, par des liaisons conductrices 2, chaque ligne présentant une sortie d'interconnexion IL₁, IL₂ et IL₃.

Bien entendu, il est également possible d'interconnecter les électrodes inférieures selon les lignes et les électrodes supérieures selon les colonnes.

Chacun des fils de sortie est connecté à une entrée d'une chaîne de lecture CL₁, CL₂, CL₃, CC₁, CC₂ et CC₃. A titre d'exemple, une telle chaîne de lecture est constituée par un ampli opérationnel AL₁, AL₂, AL₃, AC₁, AC₂, AC₃ à gain élevé, qui présente par exemple en contre-réaction un réseau parallèle RC. Une entrée de ces amplificateurs est couplé à la sortie d'interconnexion correspondant à une ligne ou à une colonne, et l'autre entrée est portée à une tension, qui est une tension de polarisation V_{B} pour les lignes (amplificateurs AL₁, AL₂ et AL₃) et une tension de pôle de mode commun (ou masse) pour les colonnes (amplificateurs AC₁, AC₂ et AC₃). Bien entendu, cette polarisation pourrait être inversée (pôle de mode commun pour les lignes et tension de polarisation V_{B} pour les colonnes).

Chacun des amplificateurs précités est avantageusement couplé à un circuit de détection à seuil qui comporte par exemple un filtre F, un détecteur de seuil TD et un échantilloneur-bloqueur SH. Le détecteur de seuil TD permet de détecter un évènement qui génère un signal dépassant un seuil donné. Lorsqu'un photon est absorbé par le pixel du détecteur situé au croisement de la ligne « i » et de la colonne « j », les chaînes d'acquisition correspondantes détectent simultanément l'événement. Chaque événement peut donc être localisé en détectant les coïncidences entre les amplificateurs des lignes et des colonnes. Le détecteur peut à cet effet présenter un circuit de détection de coïncidences CDC pour détecter des coïncidences entre des signaux détectés par les lignes et par les colonnes.

Le dispositif selon l'invention permet de diminuer de manière importante le nombre de pistes conductrices sur la puce du détecteur, ainsi que le nombre de plots de contact, et de liaisons conductrices vers les chaînes d'acquisition, de même que le nombre de chaînes d'acquisition.

En ce qui concerne les électrodes supérieures celles-ci servent de conducteurs, et elles sont interconnectées par de courtes liaisons 2 qui sont situées en dehors du périmètre des électrodes supérieures, d'où l'absence de zone aveugle.

## Revendications

1. Détecteur du type à pixels actifs comprenant M lignes et N colonnes, chaque pixel comprenant une électrode supérieure de détection et une électrode inférieure de détection, caractérisé en ce que les électrodes supérieures de détection sont interconnectées suivant les lignes (ou les colonnes), en ce que les électrodes inférieures sont interconnectées suivant les colonnes (ou les lignes), pour former pour chaque ligne, une sortie d'interconnexion de ligne (IL₁, IL₂, IL₃) et pour chaque colonne, une sortie d'interconnexion de colonne (IC₁, IC₂, IC₃), chaque ligne étant portée à un premier potentiel et couplée à un amplificateur de ligne (AL₁, AL₂, AL₃), et chaque colonne étant portée à un deuxième potentiel et couplée à un amplificateur de colonne (AC₁, AC₂, AC₃)

2. Détecteur selon la revendication 1, caractérisé en ce qu'il est du type supraconducteur à effet tunnel (« STJ »).

3. Détecteur selon une des revendications 1 ou 2, caractérisé en ce que les amplificateurs de ligne (AL₁, AL₂, AL₃) sont des amplificateurs à gain élevé, dont une première entrée est portée au premier potentiel et dont une deuxième entrée est connectée à une dite interconnexion de ligne.

4. Détecteur selon une des revendications 1 à 3, caractérisé en ce que les amplificateurs de colonne (AC₁, AC₂, AC₃) sont des amplificateurs à gain élevé, dont une première entrée est portée au deuxième potentiel et dont une deuxième entrée est connectée à une dite interconnexion de colonne (IC₁, IC₂, IC₃).

5. Détection selon une des revendications précédentes, caractérisé en ce que la sortie des amplificateurs de ligne est couplée à un circuit de détection à seuil (F, TD, SM).

6. Détection selon une des revendications précédentes, caractérisé en ce qu'il compte un circuit de détection de coïncidence (CDC) pour détecter des coïncidences entre des signaux détectées par les lignes et par les colonnes.
